# EUROPEAN PATENT APPLICATION

(11) **EP 4 641 370 A1**
(43) Date of publication of application: **29.10.2025**
(21) Application number: 25171674.2
(22) Date of filing: 22.04.2025
(51) Int. Cl.: G06F 8/51, G06F 8/72, G06F 11/3668, G06N 20/00, G06F 8/30

(54) **SYSTEMS AND METHODS FOR GENERATING REDUNDANT CODE TO ENABLE ROBUST SOFTWARE APPLICATIONS**

(30) Priority: 25.04.2024 US 202418646219
(71) Applicant: Robert Bosch GmbH, 70442 Stuttgart (DE)
(72) Inventor: Kulandaivel, Sekar, Pittsburgh, PA, 15201 (US); Guajardo Merchan, Jorge, Pittsburgh, Pennsylvania, 15216 (US); Jain, Shalabh, Pittsburgh, Pennsylvania, 15213 (US)
(74) Representative: Isarpatent

(57) **Abstract**

A method for generating redundant code includes receiving a first software program and providing, to an artificial intelligence engine, the first software program configured to perform a function. The method also receiving, from the artificial intelligence engine, a second software program configured to perform the function. The method also includes, in response to verifying the function of the second software program executing at least one of the code of the first software program and the code associated with the second software program to cause the function to be performed. The method also includes, in response to detecting a fault, disabling execution of one of the first software program and the second software program, and executing the other of the first software program and the second software program to cause the function to be performed.

## Description

### TECHNICAL FIELD

The present disclosure relates to the code generation, and in particular to systems and methods for generating redundant code to enable robust software applications.

### BACKGROUND

Software redundancy, particularly in the development of software for vehicle control or vehicle data management, is becoming increasingly more critical. Typically, software developers provide robustness in systems by providing two identical copies of the same functionality implemented in either software or hardware. This type of approach has been codified into automotive development guidelines most prominently in the automotive safety integrity level (ASIL) guidelines and/or standards. ASIL guidelines are meant to protect against safety events, which, by definition, are not malicious in nature. However, malicious attacks or faults resulting from malicious attacks, are becoming increasingly more prevalent.

### SUMMARY

An aspect of the disclosed embodiments includes a method for generating redundant code. The method includes receiving a first software program. The first software program includes code that, when executed, causes at least one function to be performed. The method also includes receiving a test suite configured to verify functionality of the at least one function, providing, to an artificial intelligence engine, the first software program, and receiving, from the artificial intelligence engine, a second software program, the second software program comprising code that, when executed, causes the at least one function to be performed, wherein the code of the second software program is different from the code of the first software program. The method also includes using the test suite to verify functionality of the at least one function of the second software program, and, in response to verifying the at least one function of the second software program, storing, in memory associated with at least one controller, the first software program and the second software program, wherein the at least one controller executes at least one of the code of the first software program and the code associated with the second software program to cause the at least one function to be performed. The method also includes, in response to detecting a fault in the at least one of the code of the first software program and the code of the second software program: disabling, using the at least one controller, execution of the at least one of the code of the first software program and the code of the second software program; and executing, by the at least one controller, the other of the at least one of the code of the first software program and the code of the second software program to cause the at least one function to be performed.

Another aspect of the disclosed embodiments includes a system for generating redundant code. The system includes a processor, and a memory. The memory includes instructions that, when execute by the processor, causes the processor to: receive a first software program, the first software program comprising code that, when executed, causes at least one function to be performed; receive a test suite configured to verify functionality of the at least one function; provide, to an artificial intelligence engine, the first software program; receive, from the artificial intelligence engine, a second software program, the second software program comprising code that, when executed, causes the at least one function to be performed, wherein the code of the second software program is different from the code of the first software program; use the test suite to verify functionality of the at least one function of the second software program; in response to verifying the at least one function of the second software program, execute at least one of the code of the first software program and the code associated with the second software program to cause the at least one function to be performed; and, in response to detecting a fault in the at least one of the code of the first software program and the code of the second software program: disable execution of the at least one of the code of the first software program and the code of the second software program; and execute the other of the at least one of the code of the first software program and the code of the second software program to cause the at least one function to be performed.

Another aspect of the disclosed embodiments includes an apparatus for generating redundant code. The apparatus includes an electronic control unit of a vehicle, and a memory. The memory includes instructions that, when executed by the electronic control unit, causes the electronic control unit to: receive a first software program, the first software program comprising code that, when executed, causes at least one function associated with at least one aspect of vehicle operation to be performed; provide, to an artificial intelligence engine, the first software program; receive, from the artificial intelligence engine, a second software program, the second software program comprising code that, when executed, causes the at least one function to be performed, wherein the code of the second software program is different from the code of the first software program; use a test suite to verify functionality of the at least one function of the second software program; in response to verifying the at least one function of the second software program, execute at least one of the code of the first software program and the code associated with the second software program to cause the at least one function to be performed; and, in response to detecting a cyber security fault in the at least one of the code of the first software program and the code of the second software program: disable execution of the at least one of the code of the first software program and the code of the second software program; and execute the other of the at least one of the code of the first software program and the code of the second software program to cause the at least one function to be performed.

### BRIEF DESCRIPTION OF THE DRAWINGS

FIG. 1 generally illustrates a system for training a neural network, according to the principles of the present disclosure.
FIG. 2 generally illustrates a computer-implemented method for training and utilizing a neural network, according the principles of the present disclosure.
FIG. 3A generally illustrates an automotive electronic control unit having multiple applications running on a microprocessor, according to the principles of the present disclosure.
FIG. 3B generally illustrates entities and interactions for generating redundant code having a desired functionality, according to the principles of the present disclosure.
FIG. 4 is a flow diagram generally illustrating a redundant code generation method, according to the principles of the present disclosure.
FIG. 5 depicts a schematic diagram of a control system, according to the principles of the present disclosure.

### DETAILED DESCRIPTION

Embodiments of the present disclosure are described herein. It is to be understood, however, that the disclosed embodiments are merely examples and other embodiments can take various and alternative forms. The figures are not necessarily to scale; some features could be exaggerated or minimized to show details of particular components. Therefore, specific structural and functional details disclosed herein are not to be interpreted as limiting, but merely as a representative basis for teaching one skilled in the art to variously employ the embodiments. As those of ordinary skill in the art will understand, various features illustrated and described with reference to any one of the figures can be combined with features illustrated in one or more other figures to produce embodiments that are not explicitly illustrated or described. The combinations of features illustrated provide representative embodiments for typical applications. Various combinations and modifications of the features consistent with the teachings of this disclosure, however, could be desired for particular applications or implementations.

As described, software redundancy, particularly in the development of software for vehicle control or vehicle data management, is becoming increasable more critical. Typically, software developers provide robustness in systems by providing two identical copies of the same functionality implemented in either software or hardware. This type of approach has been codified into automotive development guidelines most prominently in the automotive safety integrity level (ASIL) guidelines and/or standards. ASIL guidelines are meant to protect against safety events, which, by definition, are not malicious in nature. However, malicious attacks or faults resulting from malicious attacks, are becoming increasingly more prevalent.

According to some standards a fault may include an abnormal condition that can cause an element or an item to fail. The safety of electric and electronic systems may be enhanced by safety mechanism, such as safety mechanisms that can be implemented either in hardware or software (e.g., in automotive or other suitable applications). For example, such safety mechanisms may include detect and correct features and/or detect and inhibit features. Detect and correct mechanisms may include a safety mechanism that monitors an element, and when a fault is identified, the safety mechanism can correct the fault. The fault does not turn into a failure of the element, functionality is maintained, and the fault is not perceived by the other elements of the system (e.g., from a failure of operations perspective). Additionally, or alternatively, detect and inhibit mechanisms may include a safety mechanism that monitors an element, and when a fault is identified, the safety mechanism stops the element. The functionality is not maintained in this case and the fault is perceived. The fault becomes a failure of the element, but the element is set to a defined inhibited state. The failure will not affect other elements of the system, avoiding various undesirable outcomes.

Typically, a safety mechanism includes two parts: a detection and an actuation. Examples of safety mechanisms includes redundancy (e.g., lockstep, triple modular redundancy, redundant multithreading, and/or the like), self-test (e.g., built-in self-test, software-based self-test, logic built-in self-test, watchdogs, and/or the like), error correcting codes, and/or any other suitable safety mechanism.

Increasingly, software vulnerabilities are discovered due to programming errors. Software vulnerabilities are often parts of a software program that can lead to an attack or exploit. This is often observed in practice as the misuse of the software program with the vulnerability to gain access to certain privilege or asset that the application running the software is not meant to have. The implication is that once the vulnerability is exploited by an attacker, the attacker can perform tasks or gain knowledge to data in the system, which in the worst case can lead to complete system failure.

An important aspect of such software vulnerability and resulting exploits is that, while the vulnerability is often not introduced in a malicious manner (e.g., the programmer often makes an unintended programming mistake), the exploitation of the vulnerability is malicious and performed by a malicious actor. A well-known example of a software vulnerability is a buffer overflow. Thus, simple redundancy is insufficient to address such exploits, as the redundant copy would exhibit the same vulnerability.

Accordingly, systems and methods, such as the systems and methods described herein, configured to generate redundant code configured to enable robust software applications in view of such vulnerabilities, may be desirable. In some embodiments, the systems and methods described herein may be configured to provide redundancy in software implementations which provide guarantees against certain security vulnerabilities.

In some embodiments, the systems and methods described herein may be configured to generate software that is inherently more robust against malicious exploitation of vulnerabilities. The systems and methods described herein may be configured to provide redundancy for safety critical systems using differences on how the redundancy is codified or implemented.

The systems and methods described herein may be configured to provide an efficient method to create redundant software implementations (e.g., and/or hardware implementations or FPGA design, for system protection. The systems and methods described herein may be configured to build the redundancy in such a way that it is unlikely that both software versions will suffer from the same (e.g., zero day) vulnerability. The systems and methods described herein may be configured to generate two software versions with the same functionality with different implementations. Becauses the software versions are implemented differently, at least one of the software versions will likely withstand a novel (e.g., zero-day) attack and can be used as the default implementation (e.g., or enabled implementation) until a more permanent fix to the zero-day vulnerability is found and more permanently deployed.

The systems and methods described herein may be configured to provide a system that is highly efficient and reduces the human effort to create redundant functionality. For example, The systems and methods described herein may be configured to use artificial intelligence (AI) based methods to aid in generating a similar version, with the same functionality but different implementation, which may reduce the cost and/or effort to implement the desired solution.

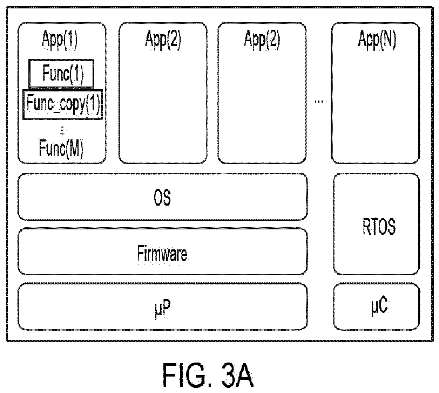

In some embodiments, the systems and methods described herein may be configured to identify vulnerabilities in software programs (e.g., and/or hardware and FPGAs). FIG. 3A generally illustrates an automotive electronic control unit (ECU) having multiple applications running on a microprocessor. Application 1 (App(1)) has two identical implementations of the same function. The functions can be run in parallel or serial manner and produce a result that can be verified for purposes of safety guarantees. Noticing that since they are identical implementations if a vulnerability is found, it will be found in both func(1) and func_copy(1). It should be understood that, while an automotive example is illustrated and described herein, the principles of the present disclosure may be applied to any suitable application.

In some embodiments, the systems and methods described herein may be configured to use two different redundant implementations of the same function for purposes of security. For example, if one implementation is if found to have a vulnerability, the systems and methods described herein may be configured to replace the vulnerable implementation with the other implementation, which will likely not suffer from the same vulnerability. The systems and methods described herein may be configured to generate two different implementations of the same function (e.g., functionally, the two functions are the same but are implemented differently).

The systems and methods described herein may be configured to generate and/or receive a snippet of code (e.g., which may be referred to herein as the original code, the initial code, and the like). The initial code may comprise a snippet of computer code written in high-level language (e.g., C, C++, Rust, WebAssembly, java, etc.) The snippet may be a part of a function, a single function, or be comprised of several functions. The initial code include assembly language for any hardware platform, HDL (e.g.,VHDL or Verilog), and/or the like. Additionally, or alternatively, the code may comprise one implementation in one programming language and a second one in a different programming language, where the systems and methods described herein may use a transpiler to compile to a common programming language implementation. It should be understood that, while high-level language is described, the systems and methods described herein may be applied to any software implementation.

In some embodiments, the systems and methods described herein may be configured to generate or receive code for configurable hardware. For example, the initial code may consist of hardware description language (HDL) code representing functions to be implemented on reconfigurable hardware, such as FPGAs.

In some embodiments, the systems and methods described herein may be configured to generate or receive code for networking infrastructure. For software defined networks, the configuration of the network can be defined in a file using well defined syntax and deployed using an orchestration tool. Such a file can be used as an input where the reconfiguration of the network can be used to defend against network-based attacks.

The systems and methods described herein may be configured to generate and/or receive a test suite, which verifies a desired functionality of the code snippet. The test suite may include functional tests, integration tests, safety related tests, any other suitable tests, or a combination thereof. The systems and methods described herein may be configured to request (e.g., via a software interface or using any suitable technique) an AI based system to generate code with the same functionality as the snippet of code. The AI system may be a pre-trained generative model with cross-attention layers, a tuned large language model, a parametrized deep neural network, a foundational generative model, a transformer architecture, any suitable deep neural network, any other suitable AI system, or a combination thereof. Additionally, or alternatively, the AI system may be fine-tuned for the task of generating alternative representations of code snippets or code portions.

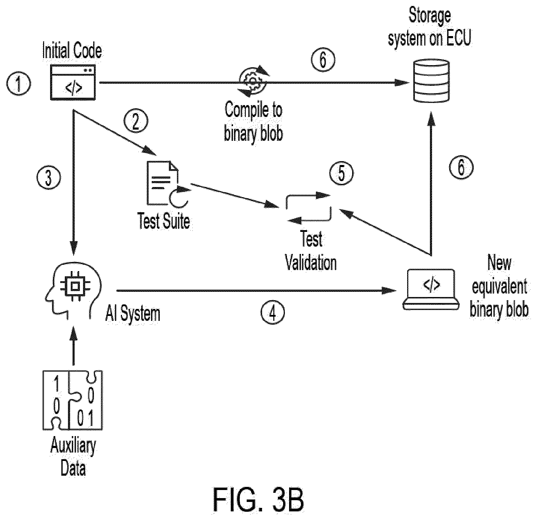

FIG. 3B generally illustrates entities and interactions for generating the redundant code having the desired functionality. In some embodiments, the systems and methods described herein may be configured to fine-tune the AI system using a public dataset. For example, the AI system may be fine-tuned using a training set, a labelled corpus of existing well-known snippets of vulnerable code and fixed code derived from public vulnerability databases and/or any other suitable public data or information. Additionally, or alternatively, the AI system may be fine-tuned using discussions on public forums, such as using alternative implementations of the same functionality obtained via crowdsourcing.

In some embodiments, the systems and methods described herein may be configured to use calling and/or called code snippets. For example, the auxiliary data input to the AI system may include multiple additional elements of code that invoke the given snippet of code, and external functions that are invoked within the snippet of code. The AI system may use such information to add variations within the target code, including, but not limited to, flattening functions invoked within the target code and optimizing the resulting code, splitting the target code into smaller functions and replacing the occurrences of the target code with the resulting functions, and/or any other suitable variations.

In some embodiments, the systems and methods described herein may be configured to use prompt-based tuning to tune the AI system. For example, the AI system may be tuned using different prompts, allowing different tradeoffs, for generating alternative code snippets. The prompts may be provided as auxiliary data input or be randomly selected by the AI system from a pre-defined list. The prompts may include generating code with fewer variables than the original code (e.g., the received or generated snippet of code), generating code with faster runtime than the original code, generating code with lower memory footprint than the original code, generating code different ordering of independent code elements, generating code with the same functionality but following a different algorithmic approach (e.g., the original code may include one sorting algorithm (e.g., binary search) and the AI system may provide a different implementation using bubble sort or merge sort, etc.) and/or any other suitable prompts.

In some embodiments, the systems and methods described herein may be configured to generate code for different architectures. For example, the AI system may take, as input auxiliary data, the design architecture assumptions of the target code (e.g., the snippet or code generated by the AI system). The AI system may generate output code by modifying the design architecture assumption such that the generated code is forward compatible with the design assumptions. The design assumptions may include taking code with the assumption of a 32-bit architecture and generating code assuming the target architecture is 8-bit, taking code with the assumption of availability of specific hardware (e.g., a 32 bit multiplier or vector operations) and modifying the code to assume the existence of different, lower capability hardware (e.g., a 16 bit multiplier, or the absence of vector operations), taking code with an endianness assumption and target processor, and generating code with a different endianness and corresponding adjustments, if the target processor supports it, any other suitable design assumptions, or a combination thereof.

In some embodiments, the systems and methods described herein may be configured to generate code using any suitable programming language, including, but not limited to, various high-level languages. For example, the AI system may receive, as input, code in a high-level language (e.g., C++, or other suitable language) and may generate functionally equivalent code in a different high-level language that may be compiled to a binary segment (e.g., Rust or other suitable binary code segment type). The AI system may output the binary segment resulting from compilation of the converted code snippet.

In some embodiments, the systems and methods described herein may be configured to use the test suite. For example, the auxiliary data input to the AI system may include the test suite, and the AI system may select a random subset of the variants pre-specified if the output of the variants pass the test suite.

In some embodiments, the systems and methods described herein may be configured to generate the code based on a security priority. For example, the original code may consist of a selection of sections from larger code snippet, where the selection is based on one of: a selected code that has a high likelihood of finding a security vulnerability (e.g., such likelihood may be computed based on an analysis of a history of well-known vulnerabilities; a selected code that requires high security guarantees, as determined based an analysis of the system (e.g., such code may consist of code for critical functions, code sections that are directly attached to external interfaces, etc.); and/or any other suitable selections.

The systems and methods described herein may be configured to provide to the AI system, as input, the code snippet, one or more additional inputs (e.g., that may include auxiliary data to guide the AI system), and/or any other suitable input. The systems and methods described herein may be configured to, using the AI system, generate a new snippet of code having the same function as the code snippet. The new snippet of code may be implemented differently than the code snippet.

The systems and methods described herein may be configured to use the test suite to test the functionality of the function the AI generated new snippet of code. The systems and methods described herein may be configured to deploy the snippet of code and the new snippet of code to the ECU of a vehicle (e.g., or to any suitable processor or controller associated with any suitable machine, mechanism, application, and/or the like).

The systems and methods described herein may be configured to, in response to a bug or vulnerability being detected (e.g., using an Intrusion Detection System (IDS), IDPS, VSOC, or combination thereof) in one of the snippets of code during the use by the ECU, generate and/or transmit a command to the ECU to disable the snippet of code (e.g., and/or the associated function) having the vulnerability and to use the other snippet of code to perform the function.

In some embodiments, the systems and methods described herein may be configured to receive a first software program. The first software program may include code that, when executed, causes at least one function to be performed. The systems and methods described herein may be configured to receive a test suite configured to verify functionality of the at least one function. The test suite may include at least one of at least one function test, at least one integration test, at least one safety test, and/or at least one other suitable test. The systems and methods described herein may be configured to provide, to an artificial intelligence engine, the first software program. The artificial intelligence engine may be configured to use at least one machine learning model trained to generate software programs. The at least one machine learning model may include a generative model, at least one cross-attention layer, a tuned large language model, a deep neural network, and/or any other suitable machine learning model. In some embodiments, the systems and methods described herein may be configured to provide, to the artificial intelligence engine, at least one additional input. The at least one additional input includes auxiliary data and/or any other suitable input.

The systems and methods described herein may be configured to receive, from the artificial intelligence engine, a second software program. The second software program may include code that, when executed, causes the at least one function to be performed. The code of the second software program may be different from the code of the first software program.

The systems and methods described herein may be configured to use the test suite to verify functionality of the at least one function of the second software program. The systems and methods described herein may be configured to, in response to verifying the at least one function of the second software program, store, in memory associated with at least one controller, the first software program and the second software program. The at least one controller may execute at least one of the code of the first software program and the code associated with the second software program to cause the at least one function to be performed. The at least one controller may include a vehicle controller or other suitable controller. The at least one function is associated with at least one aspect of vehicle operation and/or any other suitable function.

The systems and methods described herein may be configured to, in response to detecting a fault in the at least one of the code of the first software program and the code of the second software program, disable, using the at least one controller, execution of the at least one of the code of the first software program and the code of the second software program. The fault may correspond to a cyber security vulnerability. The systems and methods described herein may be configured to execute, by the at least one controller, the other of the at least one of the code of the first software program and the code of the second software program to cause the at least one function to be performed.

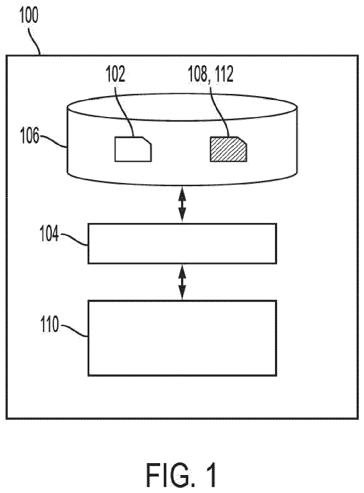

FIG. 1 shows a system 100 for training a neural network. The system 100 may comprise an input interface for accessing training data 102 for the neural network. For example, as illustrated in FIG. 1, the input interface may be constituted by a data storage interface 104 which may access the training data 102 from a data storage 106. For example, the data storage interface 104 may be a memory interface or a persistent storage interface, e.g., a hard disk or an SSD interface, but also a personal, local or wide area network interface such as a Bluetooth, Zigbee or Wi-Fi interface or an ethernet or fiberoptic interface. The data storage 106 may be an internal data storage of the system 100, such as a hard drive or SSD, but also an external data storage, e.g., a network-accessible data storage.

In some embodiments, the data storage 106 may further comprise a data representation 108 of an untrained version of the neural network which may be accessed by the system 100 from the data storage 106. It will be appreciated, however, that the training data 102 and the data representation 108 of the untrained neural network may also each be accessed from a different data storage, e.g., via a different subsystem of the data storage interface 104. Each subsystem may be of a type as is described above for the data storage interface 104.

In some embodiments, the data representation 108 of the untrained neural network may be internally generated by the system 100 on the basis of design parameters for the neural network, and therefore may not explicitly be stored on the data storage 106. The system 100 may further comprise a processor subsystem 110 which may be configured to, during operation of the system 100, provide an iterative function as a substitute for a stack of layers of the neural network to be trained. Here, respective layers of the stack of layers being substituted may have mutually shared weights and may receive as input an output of a previous layer, or for a first layer of the stack of layers, an initial activation, and a part of the input of the stack of layers.

The processor subsystem 110 may be further configured to iteratively train the neural network using the training data 102. Here, an iteration of the training by the processor subsystem 110 may comprise a forward propagation part and a backward propagation part. The processor subsystem 110 may be configured to perform the forward propagation part by, amongst other operations defining the forward propagation part which may be performed, determining an equilibrium point of the iterative function at which the iterative function converges to a fixed point, wherein determining the equilibrium point comprises using a numerical root-finding algorithm to find a root solution for the iterative function minus its input, and by providing the equilibrium point as a substitute for an output of the stack of layers in the neural network.

The system 100 may further comprise an output interface for outputting a data representation 112 of the trained neural network, this data may also be referred to as trained model data 112. For example, as also illustrated in FIG. 1, the output interface may be constituted by the data storage interface 104, with said interface being in these embodiments an input/output ('IO') interface, via which the trained model data 112 may be stored in the data storage 106. For example, the data representation 108 defining the 'untrained' neural network may during or after the training be replaced, at least in part by the data representation 112 of the trained neural network, in that the parameters of the neural network, such as weights, hyperparameters and other types of parameters of neural networks, may be adapted to reflect the training on the training data 102. This is also illustrated in FIG. 1 by the reference numerals 108, 112 referring to the same data record on the data storage 106. In some embodiments, the data representation 112 may be stored separately from the data representation 108 defining the 'untrained' neural network. In some embodiments, the output interface may be separate from the data storage interface 104, but may in general be of a type as described above for the data storage interface 104.

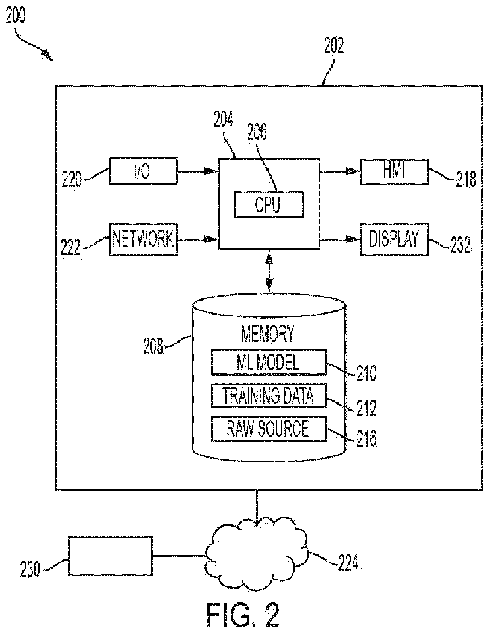

FIG. 2 generally illustrates a data annotation/augmentation system 200 configured to provide new source code. The system 200 may include at least one computing system 202. The computing system 202 may include at least one processor 204 that is operatively connected to a memory unit 208. The processor 204 may include one or more integrated circuits that implement the functionality of a central processing unit (CPU) 206. The CPU 206 may be a commercially available processing unit that implements an instruction stet such as one of the x86, ARM, Power, or MIPS instruction set families.

During operation, the CPU 206 may execute stored program instructions that are retrieved from the memory unit 208. The stored program instructions may include software that controls operation of the CPU 206 to perform the operation described herein. In some embodiments, the processor 204 may be a system on a chip (SoC) that integrates functionality of the CPU 206, the memory unit 208, a network interface, and input/output interfaces into a single integrated device. The computing system 202 may implement an operating system for managing various aspects of the operation.

The memory unit 208 may include volatile memory and non-volatile memory for storing instructions and data. The non-volatile memory may include solid-state memories, such as NAND flash memory, magnetic and optical storage media, or any other suitable data storage device that retains data when the computing system 202 is deactivated or loses electrical power. The volatile memory may include static and dynamic random-access memory (RAM) that stores program instructions and data. For example, the memory unit 208 may store a machine-learning model 210 (e.g., represented in FIG. 2 as the ML Model 210) or algorithm, a training dataset 212 for the machine-learning model 210, raw source dataset 216.

The computing system 202 may include a network interface device 222 that is configured to provide communication with external systems and devices. For example, the network interface device 222 may include a wired and/or wireless Ethernet interface as defined by Institute of Electrical and Electronics Engineers (IEEE) 802.11 family of standards. The network interface device 222 may include a cellular communication interface for communicating with a cellular network (e.g., 3G, 4G, 5G). The network interface device 222 may be further configured to provide a communication interface to an external network 224 or cloud.

The external network 224 may be referred to as the world-wide web or the Internet. The external network 224 may establish a standard communication protocol between computing devices. The external network 224 may allow information and data to be easily exchanged between computing devices and networks. One or more servers 230 may be in communication with the external network 224.

The computing system 202 may include an input/output (I/O) interface 220 that may be configured to provide digital and/or analog inputs and outputs. The I/O interface 220 may include additional serial interfaces for communicating with external devices (e.g., Universal Serial Bus (USB) interface).

The computing system 202 may include a human-machine interface (HMI) device 218 that may include any device that enables the system 200 to receive control input. Examples of input devices may include human interface inputs such as keyboards, mice, touchscreens, voice input devices, and other similar devices. The computing system 202 may include a display device 232. The computing system 202 may include hardware and software for outputting graphics and text information to the display device 232. The display device 232 may include an electronic display screen, projector, printer or other suitable device for displaying information to a user or operator. The computing system 202 may be further configured to allow interaction with remote HMI and remote display devices via the network interface device 222.

The system 200 may be implemented using one or multiple computing systems. While the example depicts a single computing system 202 that implements all of the described features, it is intended that various features and functions may be separated and implemented by multiple computing units in communication with one another. The particular system architecture selected may depend on a variety of factors.

The system 200 may implement a machine-learning model 210 (e.g., which may be referred to as the machine-learning algorithm 210) that is configured to analyze the raw source dataset 216. The raw source dataset 216 may include raw code samples that may be representative of an input dataset for a machine-learning system. In some embodiments, the machine-learning model 210 may be a neural network algorithm that is designed to perform a predetermined function.

The computer system 200 may store a training dataset 212 for the machine-learning model 210. The training dataset 212 may represent a set of previously constructed data for training the machine-learning model 210. The training dataset 212 may be used by the machine-learning model 210 to learn weighting factors associated with a neural network algorithm. The training dataset 212 may include a set of source data that has corresponding outcomes or results that the machine-learning model 210 tries to duplicate via the learning process. In this example, the training dataset 212 may include code samples and/or source coude.

The machine-learning model 210 may be operated in a learning mode using the training dataset 212 as input. The machine-learning model 210 may be executed over a number of iterations using the data from the training dataset 212. With each iteration, the machine-learning model 210 may update internal weighting factors based on the achieved results. For example, the machine-learning model 210 can compare output results (e.g., annotations) with those included in the training dataset 212. Since the training dataset 212 includes the expected results, the machine-learning model 210 can determine when performance is acceptable. After the machine-learning model 210 achieves a predetermined performance level (e.g., 100% agreement with the outcomes associated with the training dataset 212), the machine-learning model 210 may be executed using data that is not in the training dataset 212. The trained machine-learning model 210 may be applied to new datasets put to the machine-learning model 210.

In the example, the machine-learning model 210 may process raw source data 216 and output new source code. The machine-learning model 210 may generate a confidence level (e.g., a certainty value) or factor for each output generated. For example, a confidence value that exceeds a predetermined high-confidence threshold may indicate that the machine-learning model 210 is confident that the new source code. A confidence value that is less than a low-confidence threshold may indicate that the machine-learning model 210 has some uncertainty that the new source code is accurate.

In some embodiments, the system 200 may, using a machine-learning model, such as the machine-learning model 210, receive input dialog captured by an input mechanism (e.g., such as a keyboard, and/or any other suitable input mechanism). The input dialog may include a text string or other suitable input.

The system 200 may receive various data. The system 200, using the machine-learning model 210, may provide new source code, using the various data. The system 200 may provide, at an output mechanism (e.g., such as the display 232, HMI 218, I/O 220, or any other suitable mechanism), the new source code.

The system 200 may store, in an associated memory, such as the memory 208 or other suitable memory, the text string, the at least one sub-goal, any other suitable date or information, or a combination thereof. The system 200 my receive feedback in response to providing the new source code. For example, a user of the system 200 may provide verbal, textual or other suitable feedback (e.g., as an input) based on the perspective of the user that the new source code is accurate or correct. The system 200 may subsequently train the machine-learning model 210 based on the feedback (e.g., in order to improve future predations).

In some embodiments, the system 200 may be configured to generate redundant code to enable robust vulnerability resilience. For example, the system 200 may receive a first software program. The first software program may include code that, when executed, causes at least one function to be performed. The system 200 may receive a test suite configured to verify functionality of the at least one function. The system 200 may provide, to an artificial intelligence engine, the first software program. The artificial intelligence engine may be configured to use at least one machine learning model, such as the machine learning model 202 or other suitable machine learning model, trained to generate software programs. The at least one machine learning model 202 may include a generative model, at least one cross-attention layer, a tuned large language model, a deep neural network, and/or any other suitable machine learning model. In some embodiments, system 200 may provide, to the artificial intelligence engine, at least one additional input. The at least one additional input includes auxiliary data and/or any other suitable input.

The system 200 may receive, from the artificial intelligence engine, a second software program. The second software program may include code that, when executed, causes the at least one function to be performed. The code of the second software program may be different from the code of the first software program.

The system 200 may use the test suite to verify functionality of the at least one function of the second software program. The system 200 may, in response to verifying the at least one function of the second software program, store, in memory, the first software program and the second software program. The system 200 may execute at least one of the code of the first software program and the code associated with the second software program to cause the at least one function to be performed.

The system 200 may, in response to detecting a fault in the at least one of the code of the first software program and the code of the second software program, disable execution of the at least one of the code of the first software program and the code of the second software program. The system 200 may execute the other of the at least one of the code of the first software program and the code of the second software program to cause the at least one function to be performed.

It should be understood that the systems and methods described herein may be configured to perform any suitable function in addition to and/or instead of those described herein

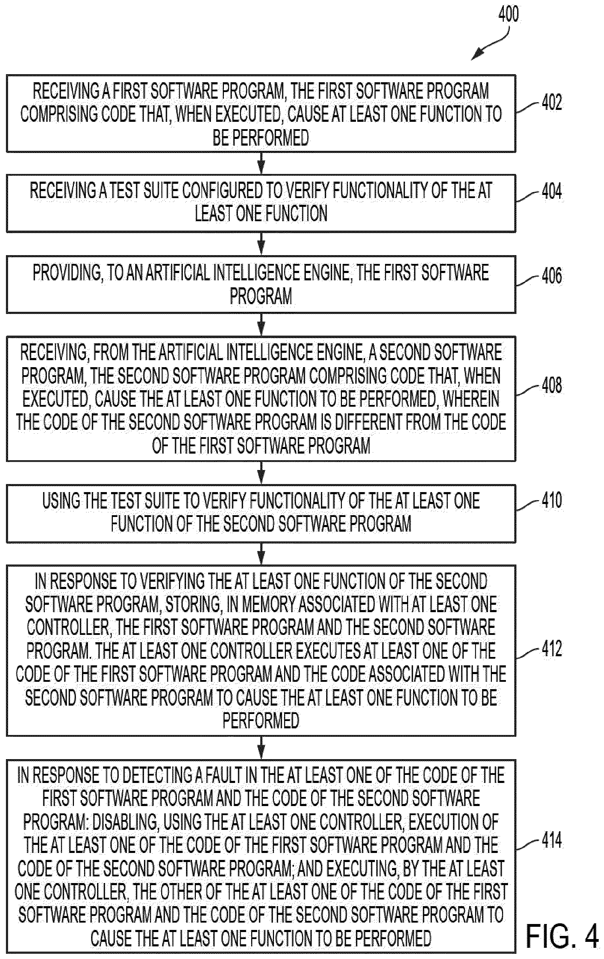

FIG. 4 is a flow diagram generally illustrating a redundant code generation method 400 according to the principles of the present disclosure. At 402, the method 400 receives a first software program. The first software program may include code that, when executed, causes at least one function to be performed. For example, the system 200 may receive the first software program.

At 404, the method 400 receives a test suite configured to verify functionality of the at least one function. For example, the system 200 may receive the test suite.

At 406, the method 400 provides, to an artificial intelligence engine, the first software program. For example, the system 200 may provide, to the artificial intelligence engine, the first software program.

At 408, the method 400 receives, from the artificial intelligence engine, a second software program. The second software program may include code that, when executed, causes the at least one function to be performed. The code of the second software program may be different from the code of the first software program. For example, the system 200 may receive, from the artificial intelligence engine, the second software program.

At 410, the method 400 uses the test suite to verify functionality of the at least one function of the second software program. For example, the system 200 may use the test suite to verify functionality of the at least one function of the second software program.

At 412, the method 400, in response to verifying the at least one function of the second software program, stores, in memory associated with at least one controller, the first software program and the second software program. For example, the system 200 may, in response to verifying the at least one function of the second software program, store the first software program and the second software program. The at least one controller may execute at least one of the code of the first software program and the code associated with the second software program to cause the at least one function to be performed. The at least one controller may be associated with a vehicle. The at least one function may be associated with at least one aspect of vehicle control or operation.

At 414, the method 400, in response to detecting a fault in the at least one of the code of the first software program and the code of the second software program, (i) disables, using the at least one controller, execution of the at least one of the code of the first software program and the code of the second software program, and (ii) executes, by the at least one controller, the other of the at least one of the code of the first software program and the code of the second software program to cause the at least one function to be performed. For example, the system 200 may, in response to detecting the fault in the at least one of the code of the first software program and the code of the second software program, (i) disable, using the at least one controller, execution of the at least one of the code of the first software program and the code of the second software program, and (ii) execute, using the at least one controller, the other of the at least one of the code of the first software program and the code of the second software program to cause the at least one function to be performed.

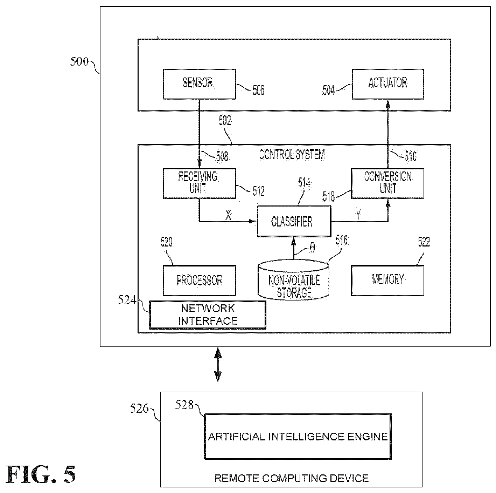

FIG. 5 depicts a schematic diagram a control system 502. The control system 502 may include an electronic control unit of a vehicle 500. The control system 502 may interact with actuator 504 and sensor 506. Actuator 504 may include one or more actuators and sensor 506 may include one or more sensors. Sensor 506 is configured to sense a condition of vehicle 500. Sensor 506 may be configured to encode the sensed condition into sensor signals 508 and to transmit sensor signals 508 to control system 502. Non-limiting examples of sensor 506 include video, radar, LiDAR, ultrasonic and motion sensors. In some embodiments, sensor 506 is an optical sensor configured to sense optical images of an environment proximate to vehicle 500.

Control system 502 is configured to receive sensor signals 508. As set forth below, control system 502 may be further configured to compute actuator control commands 510 depending on the sensor signals and to transmit actuator control commands 510 to actuator 504.

The control system 502 includes receiving unit 512. Receiving unit 512 may be configured to receive sensor signals 508 from sensor 506 and to transform sensor signals 508 into input signals x. In an alternative embodiment, sensor signals 508 are received directly as input signals x without receiving unit 512. Each input signal x may be a portion of each sensor signal 508. Receiving unit 512 may be configured to process each sensor signal 508 to product each input signal x. Input signal x may include data corresponding to an image recorded by sensor 506.

Control system 502 includes classifier 514. Classifier 514 may be configured to classify input signals x into one or more labels using a machine-learning (ML) algorithm, such as a neural network described above. Classifier 514 is configured to be parametrized by parameters, such as those described above (e.g., parameter θ). Parameters θ may be stored in and provided by non-volatile storage 516. Classifier 514 is configured to determine output signals y from input signals x. Each output signal y includes information that assigns one or more labels to each input signal x. Classifier 514 may transmit output signals y to conversion unit 518. Conversion unit 518 is configured to covert output signals y into actuator control commands 510. Control system 502 is configured to transmit actuator control commands 510 to actuator 504, which is configured to actuate computer-controlled machine 500 in response to actuator control commands 510. In some embodiments, actuator 504 is configured to actuate computer-controlled machine 500 based directly on output signals y.

Upon receipt of actuator control commands 510 by actuator 504, actuator 504 is configured to execute an action corresponding to the related actuator control command 510. Actuator 504 may include a control logic configured to transform actuator control commands 510 into a second actuator control command, which is utilized to control actuator 504. In one or more embodiments, actuator control commands 510 may be utilized to control a display instead of or in addition to an actuator.

As shown in FIG. 5, control system 502 also includes processor 520 and memory 522. Processor 520 may include one or more processors. Memory 522 may include one or more memory devices. The classifier 514 (e.g., ML algorithms) of one or more embodiments may be implemented by control system 502, which includes non-volatile storage 516, processor 520 and memory 522.

Non-volatile storage 516 may include one or more persistent data storage devices such as a hard drive, optical drive, tape drive, non-volatile solid-state device, cloud storage or any other device capable of persistently storing information. Processor 520 may include one or more devices selected from high-performance computing (HPC) systems including high-performance cores, microprocessors, micro-controllers, digital signal processors, microcomputers, central processing units, field programmable gate arrays, programmable logic devices, state machines, logic circuits, analog circuits, digital circuits, or any other devices that manipulate signals (analog or digital) based on computer-executable instructions residing in memory 522. Memory 522 may include a single memory device or a number of memory devices including, but not limited to, random access memory (RAM), volatile memory, non-volatile memory, static random access memory (SRAM), dynamic random access memory (DRAM), flash memory, cache memory, or any other device capable of storing information.

Processor 520 may be configured to read into memory 522 and execute computer-executable instructions residing in non-volatile storage 516 and embodying one or more ML algorithms and/or methodologies of one or more embodiments. Non-volatile storage 516 may include one or more operating systems and applications. Non-volatile storage 516 may store compiled and/or interpreted from computer programs created using a variety of programming languages and/or technologies, including, without limitation, and either alone or in combination, Java, C, C++, C#, Objective C, Fortran, Pascal, Java Script, Python, Perl, and PL/SQL.

Upon execution by processor 520, the computer-executable instructions of non-volatile storage 516 may cause control system 502 to implement one or more of the ML algorithms and/or methodologies as disclosed herein. Non-volatile storage 516 may also include ML data (including data parameters) supporting the functions, features, and processes of the one or more embodiments described herein.

The program code embodying the algorithms and/or methodologies described herein is capable of being individually or collectively distributed as a program product in a variety of different forms. The program code may be distributed using a computer readable storage medium having computer readable program instructions thereon for causing a processor to carry out aspects of one or more embodiments. Computer readable storage media, which is inherently non-transitory, may include volatile and non-volatile, and removable and non-removable tangible media implemented in any method or technology for storage of information, such as computer-readable instructions, data structures, program modules, or other data. Computer readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. Computer readable program instructions may be downloaded to a computer, another type of programmable data processing apparatus, or another device from a computer readable storage medium or to an external computer or external storage device via a network.

Computer readable program instructions stored in a computer readable medium may be used to direct a computer, other types of programmable data processing apparatus, or other devices to function in a particular manner, such that the instructions stored in the computer readable medium produce an article of manufacture including instructions that implement the functions, acts, and/or operations specified in the flowcharts or diagrams. In certain alternative embodiments, the functions, acts, and/or operations specified in the flowcharts and diagrams may be re-ordered, processed serially, and/or processed concurrently consistent with one or more embodiments. Moreover, any of the flowcharts and/or diagrams may include more or fewer nodes or blocks than those illustrated consistent with one or more embodiments.

The processes, methods, or algorithms can be embodied in whole or in part using suitable hardware components, such as Application Specific Integrated Circuits (ASICs), Field-Programmable Gate Arrays (FPGAs), state machines, controllers or other hardware components or devices, or a combination of hardware, software and firmware components.

As described, the control system 502 may include an electronic control unit (e.g., or one or more electronic control units) configured to control vehicle500, which may be an at least partially autonomous vehicle. Vehicle 500 may include actuator 504 and sensor 506. Sensor 506 may include one or more video sensors, cameras, radar sensors, ultrasonic sensors, LiDAR sensors, and/or position sensors (e.g. GPS). One or more of the one or more specific sensors may be integrated into vehicle 500. Alternatively, or in addition to one or more specific sensors identified above, sensor 506 may include a software module configured to, upon execution, determine a state of actuator 504.

Classifier 514 of control system 502 of vehicle 500 may be configured to detect objects in the vicinity of vehicle 500 dependent on input signals x. In such an embodiment, output signal y may include information characterizing the vicinity of objects to vehicle 500. Actuator control command 510 may be determined in accordance with this information. The actuator control command 510 may be used to avoid collisions with the detected objects.

In some embodiments, vehicle 500 is an at least partially autonomous vehicle, actuator 504 may be embodied in a brake, a propulsion system, an engine, a drivetrain, or a steering of vehicle 500. Actuator control commands 510 may be determined such that actuator 504 is controlled such that vehicle 500avoids collisions with detected objects. Detected objects may also be classified according to what classifier 514 deems them most likely to be, such as pedestrians or trees. The actuator control commands 510 may be determined depending on the classification. In a scenario where an adversarial attack may occur, the system described above may be further trained to better detect objects or identify a change in lighting conditions or an angle for a sensor or camera on vehicle500.

In some embodiments, the control system 502 may include one or more network interfaces 524, such as an Ethernet component, a controller area network (CAN) bus, a local interconnect network component (LIN), and the like. The control system 502 may use the network interface 524 and/or other suitable networks or communication systems, or a combination thereof to communicate various information from, for example, sensors within or external to the vehicle 500, to, for example, various processors or controllers within or external to the vehicle 500. Additionally, or alternatively, the control system 502 may use the network interface 524 to communicate with a remote computing device 526. The remote computing device 526 may include any suitable computing device and may comprise at least a portion of a cloud computing system and/or other suitable remotely located or distributed computing system. The remote computing device 526 may be remotely located from the vehicle 500 and/or the control system 502, such that the control system 502, via the network interface 524, may communicate with the remote computing device 526 wirelessly or via a wired connection comprising one or more communication cables configured to connect the network interface 524 to the remote computing device 526.

The remote computing device 526 may include an artificial intelligence engine 528, which may include features similar to the artificial intelligence engine described herein. For example, the artificial intelligence engine 528 may be configured to recite, at least, the code of the first software program. The artificial intelligence engine 528 may be configured to generate the code of the second software program, using the code of the first software program. Additionally, or alternatively, the artificial intelligence engine 528 may be configured to generate the code of the second software program according to any of the embodiments described herein.

In some embodiments, the remote computing device 526 may be configured to communicate the first software program (e.g., and/or the code of the first software program) and the second software program (e.g., and/or the code of the second software program), to the control system 502, via the network interface 524. The control system 502 may be configured to execute the first software program to perform functions associated with the first software program, as described. The first software program may be configured to control one or more aspects of the vehicle 500.

As described, responsive to detecting a fault in the first software program (e.g., such as a fault associated with a cyber-security attack or other suitable fault), the control system 502 may be configured to discontinue execution of the first software program and execute the second software program to perform functions associated with the second software program, which may correspond to the functions of the first software program.

In some embodiments, a method for generating redundant code includes receiving a first software program. The first software program includes code that, when executed, causes at least one function to be performed. The method also includes receiving a test suite configured to verify functionality of the at least one function, providing, to an artificial intelligence engine, the first software program, and receiving, from the artificial intelligence engine, a second software program, the second software program comprising code that, when executed, causes the at least one function to be performed, wherein the code of the second software program is different from the code of the first software program. The method also includes using the test suite to verify functionality of the at least one function of the second software program, and, in response to verifying the at least one function of the second software program, storing, in memory associated with at least one controller, the first software program and the second software program, wherein the at least one controller executes at least one of the code of the first software program and the code associated with the second software program to cause the at least one function to be performed. The method also includes, in response to detecting a fault in the at least one of the code of the first software program and the code of the second software program: disabling, using the at least one controller, execution of the at least one of the code of the first software program and the code of the second software program; and executing, by the at least one controller, the other of the at least one of the code of the first software program and the code of the second software program to cause the at least one function to be performed.

In some embodiments, the test suite includes at least one of at least one function test, at least one integration test, and at least one safety test. In some embodiments, the artificial intelligence engine is configured to use at least one machine learning model trained to generate software programs. In some embodiments, the at least one machine learning model includes a generative model. In some embodiments, the at least one machine learning model includes at least one cross-attention layer. In some embodiments, the at least one machine learning model includes a tuned large language model. In some embodiments, the at least one machine learning model includes a deep neural network. In some embodiments, the method also includes providing, to the artificial intelligence engine, at least one additional input. In some embodiments, the at least one additional input includes auxiliary data. In some embodiments, the fault is associated with cyber security. In some embodiments, the at least one controller is associated with a vehicle. In some embodiments, the at least one function is associated with at least one aspect of vehicle operation.

In some embodiments, a system for generating redundant code includes a processor, and a memory. The memory includes instructions that, when execute by the processor, causes the processor to: receive a first software program, the first software program comprising code that, when executed, causes at least one function to be performed; receive a test suite configured to verify functionality of the at least one function; provide, to an artificial intelligence engine, the first software program; receive, from the artificial intelligence engine, a second software program, the second software program comprising code that, when executed, causes the at least one function to be performed, wherein the code of the second software program is different from the code of the first software program; use the test suite to verify functionality of the at least one function of the second software program; in response to verifying the at least one function of the second software program, execute at least one of the code of the first software program and the code associated with the second software program to cause the at least one function to be performed; and, in response to detecting a fault in the at least one of the code of the first software program and the code of the second software program: disable execution of the at least one of the code of the first software program and the code of the second software program; and execute the other of the at least one of the code of the first software program and the code of the second software program to cause the at least one function to be performed.

In some embodiments, the test suite includes at least one of at least one function test, at least one integration test, and at least one safety test. In some embodiments, the artificial intelligence engine is configured to use at least one machine learning model trained to generate software programs. In some embodiments, the at least one machine learning model includes a generative model. In some embodiments, the at least one machine learning model includes at least one cross-attention layer. In some embodiments, the at least one machine learning model includes a tuned large language model. In some embodiments, the at least one machine learning model includes a deep neural network.

In some embodiments, an apparatus for generating redundant code includes an electronic control unit of a vehicle, and a memory. The memory includes instructions that, when executed by the electronic control unit, causes the electronic control unit to: receive a first software program, the first software program comprising code that, when executed, causes at least one function associated with at least one aspect of vehicle operation to be performed; provide, to an artificial intelligence engine, the first software program; receive, from the artificial intelligence engine, a second software program, the second software program comprising code that, when executed, causes the at least one function to be performed, wherein the code of the second software program is different from the code of the first software program; use a test suite to verify functionality of the at least one function of the second software program; in response to verifying the at least one function of the second software program, execute at least one of the code of the first software program and the code associated with the second software program to cause the at least one function to be performed; and, in response to detecting a cyber security fault in the at least one of the code of the first software program and the code of the second software program: disable execution of the at least one of the code of the first software program and the code of the second software program; and execute the other of the at least one of the code of the first software program and the code of the second software program to cause the at least one function to be performed.

The processes, methods, or algorithms disclosed herein can be deliverable to/implemented by a processing device, controller, or computer, which can include any existing programmable electronic control unit or dedicated electronic control unit. Similarly, the processes, methods, or algorithms can be stored as data and instructions executable by a controller or computer in many forms including, but not limited to, information permanently stored on non-writable storage media such as ROM devices and information alterably stored on writeable storage media such as floppy disks, magnetic tapes, CDs, RAM devices, and other magnetic and optical media. The processes, methods, or algorithms can also be implemented in a software executable object. Alternatively, the processes, methods, or algorithms can be embodied in whole or in part using suitable hardware components, such as Application Specific Integrated Circuits (ASICs), Field-Programmable Gate Arrays (FPGAs), state machines, controllers or other hardware components or devices, or a combination of hardware, software and firmware components.

While exemplary embodiments are described above, it is not intended that these embodiments describe all possible forms encompassed by the claims. The words used in the specification are words of description rather than limitation, and it is understood that various changes can be made without departing from the spirit and scope of the disclosure. As previously described, the features of various embodiments can be combined to form further embodiments of the invention that may not be explicitly described or illustrated. While various embodiments could have been described as providing advantages or being preferred over other embodiments or prior art implementations with respect to one or more desired characteristics, those of ordinary skill in the art recognize that one or more features or characteristics can be compromised to achieve desired overall system attributes, which depend on the specific application and implementation. These attributes can include, but are not limited to cost, strength, durability, life cycle cost, marketability, appearance, packaging, size, serviceability, weight, manufacturability, ease of assembly, etc. As such, to the extent any embodiments are described as less desirable than other embodiments or prior art implementations with respect to one or more characteristics, these embodiments are not outside the scope of the disclosure and can be desirable for particular applications.

## Claims

1. A method for generating redundant code, the method comprising:
receiving a first software program, the first software program comprising code that, when executed, causes at least one function to be performed;
receiving a test suite configured to verify functionality of the at least one function;
providing, to an artificial intelligence engine, the first software program;
receiving, from the artificial intelligence engine, a second software program, the second software program comprising code that, when executed, causes the at least one function to be performed, wherein the code of the second software program is different from the code of the first software program;
using the test suite to verify functionality of the at least one function of the second software program;
in response to verifying the at least one function of the second software program, storing, in memory associated with at least one controller, the first software program and the second software program, wherein the at least one controller executes at least one of the code of the first software program and the code associated with the second software program to cause the at least one function to be performed; and
in response to detecting a fault in the at least one of the code of the first software program and the code of the second software program:
disabling, using the at least one controller, execution of the at least one of the code of the first software program and the code of the second software program; and
executing, by the at least one controller, the other of the at least one of the code of the first software program and the code of the second software program to cause the at least one function to be performed.

2. The method of claim 1, wherein the test suite includes at least one of at least one function test, at least one integration test, and at least one safety test.

3. The method of claim **1,** wherein the artificial intelligence engine is configured to use at least one machine learning model trained to generate software programs.

4. The method of claim 3, wherein the at least one machine learning model is trained using a training set comprising data associated with known snippets of vulnerable code and fixed code derived from vulnerability databases.

5. The method of claim **1,** wherein the code of the first software program is written in a first high-level language and the code of the second software program may be generated in a second high-level language, and wherein the first high-level language is different from the second high-level language.

6. The method of claim 5, wherein the second high-level language is compiled to a binary segment.

7. The method of claim 1, further comprising providing, to the artificial intelligence engine, at least one additional input that includes auxiliary data.

8. The method of claim 7, wherein the auxiliary data includes security priority information associated with the code of the first software program

9. The method of claim 7, wherein the auxiliary data includes at least one design architecture assumption, and wherein artificial intelligence engine generates the code for the second software program by modifying the at least one design architecture assumption.

10. The method of claim 1, wherein the code of the first software program and the code of the second software program includes hardware description language code representing functions to be implemented on reconfigurable hardware.

11. The method of claim 1, wherein the code of the first software program includes networking infrastructure code, wherein a configuration for a network associated with the networking infrastructure code is defined in a file using defined syntax, and wherein the artificial intelligence engine generates the code for the second software program using the first software program and the file.

12. The method of claim 1, wherein the artificial intelligence engine may be tuned using prompt-based tuning.

13. The method of claim 1, wherein the at least one function is associated with at least one aspect of vehicle operation.

14. The method of claim 1, wherein sub-segments of the first software program are combined using the artificial intelligence engine.

15. The method of claim 1, wherein the first software program is segmented into at least two segments and each segment of the at least two segments is provided to the artificial intelligence engine individually.

16. A system for generating redundant code, the system comprising:
a processor; and
a memory including instructions that, when execute by the processor, causes the processor to:
receive a first software program, the first software program comprising code that, when executed, causes at least one function to be performed;
receive a test suite configured to verify functionality of the at least one function;
provide, to an artificial intelligence engine, the first software program;
receive, from the artificial intelligence engine, a second software program, the second software program comprising code that, when executed, causes the at least one function to be performed, wherein the code of the second software program is different from the code of the first software program;
use the test suite to verify functionality of the at least one function of the second software program;
in response to verifying the at least one function of the second software program, execute at least one of the code of the first software program and the code associated with the second software program to cause the at least one function to be performed; and
in response to detecting a fault in the at least one of the code of the first software program and the code of the second software program:
disable execution of the at least one of the code of the first software program and the code of the second software program; and
execute the other of the at least one of the code of the first software program and the code of the second software program to cause the at least one function to be performed.

17. The system of claim 15, wherein the test suite includes at least one of at least one function test, at least one integration test, and at least one safety test.

18. The system of claim 15, wherein the artificial intelligence engine is tuned using prompt-based tuning.

19. The system of claim 17, wherein prompts associated with the prompt-based tuning are provided to the artificial intelligence engine as auxiliary data input.

20. The system of claim 17, wherein prompts associated with the prompt-based tuning include at least one of generating code with fewer variables than the code of the first software program, generating code with a faster runtime than the code of the first software program, generating code with lower memory footprint than the code of the first software program, generating code with a different ordering of independent code elements than the ordering of independent code elements of the code of the first software program, and generating code with a same functionality but following a different algorithmic approach as the functionality and algorithmic approach of the code of the first software program.

21. An apparatus for generating redundant code, the apparatus comprising:
an electronic control unit of a vehicle; and
a memory including instructions that, when executed by the electronic control unit, causes the electronic control unit to:
receive a first software program, the first software program comprising code that, when executed, causes at least one function associated with at least one aspect of vehicle operation to be performed;
provide, to an artificial intelligence engine, the first software program;
receive, from the artificial intelligence engine, a second software program, the second software program comprising code that, when executed, causes the at least one function to be performed, wherein the code of the second software program is different from the code of the first software program;
use a test suite to verify functionality of the at least one function of the second software program;
in response to verifying the at least one function of the second software program, execute at least one of the code of the first software program and the code associated with the second software program to cause the at least one function to be performed; and
in response to detecting a cyber security fault in the at least one of the code of the first software program and the code of the second software program:
disable execution of the at least one of the code of the first software program and the code of the second software program; and
execute the other of the at least one of the code of the first software program and the code of the second software program to cause the at least one function to be performed.
